# DEMANDE DE BREVET EUROPEEN

(11) **EP 1 314 922 A2**
(43) Date de publication de la demande: **28.05.2003**
(21) Numéro de dépôt: 02292850.1
(22) Date de dépôt: 15.11.2002
(51) Int. Cl.: F16L 11/04, F16L 9/12

(54) **Conduite multicouche pour le transport de fluides dans les véhicules automobiles**

(30) Priorité: 27.11.2001 FR 0115297
(71) Demandeur: Nobel Plastiques, 51300 Marolles (FR)
(72) Inventeur: Miquel, Guillaume, Collège Guillaume de Concues, 27190 Concues en Ouche (FR); Milhas, Pierre, 51300 Vitry-Le-Francois (FR)
(74) Mandataire: Lavialle, Bruno

(57) **Abrégé**

Conduite multicouche de transport de fluides automobiles, comprenant :
- une couche interne (1) en polyamide,
- une couche intermédiaire (2) à base d'un mélange de polyamide et de polyoléfine,
- une couche externe (3) en un matériau thermoplastique élastomère à base de polyesteréther.

## Description

La présente invention concerne une conduite pour le transport de fluides automobiles, et plus particulièrement pour le transport de carburant.

Il existe de nombreuses structures monocouches ou multicouches à base de matériaux thermoplastiques.

On connaît ainsi des structures monocouches en polyamide 11 ou en polyamide 12 dont l'utilisation est relativement répandue malgré leur coût élevé.

Actuellement, le respect de l'environnement devient une préoccupation centrale et fait l'objet de dispositions légales (telle que la directive européenne EURO 2000) auxquelles les constructeurs automobiles sont obligés de se conformer. En outre, l'évolution technologique entraîne un durcissement des conditions d'utilisation, notamment en température, auxquelles sont soumises les conduites de ce type et plus particulièrement lorsque celles-ci sont implantées dans le compartiment moteur du véhicule.

Or, les structures connues à base de matériau thermoplastique sont en général mal adaptées à ces nouvelles contraintes.

Selon l'invention, on prévoit, une conduite multicouche de transport de fluides automobiles, comprenant :
- une couche interne en polyamide,
- une couche intermédiaire à base d'un mélange de polyamide et de polyoléfine,
- une couche externe en un matériau thermoplastique élastomère à base de polyesteréther.

Cette structure présente une basse perméabilité aux fluides automobiles tels que le carburant et elle présente aussi une bonne résistance aux fluides avec lesquels elle peut se trouver en contact lors de son utilisation sur une automobile et en particulier à l'huile, au chlorure de zinc, au liquide lave-vitre, au carburant... La conduite conforme à l'invention est en outre adaptée à un fonctionnement à des températures comprises entre 125°C et 150°C. De plus, cette conduite est relativement peu coûteuse.

D'autres caractéristiques et avantages de l'invention ressortiront à la lecture de la description qui suit d'un mode de réalisation particulier non limitatif de l'invention.

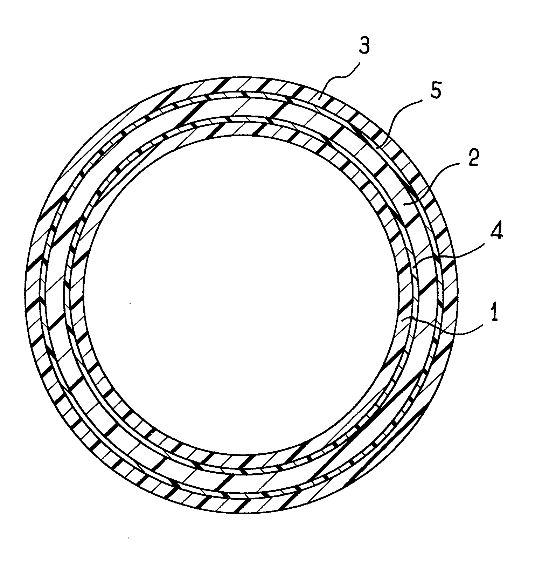

Il sera fait référence à la figure unique annexée représentant en coupe transversale une conduite conforme à l'invention.

En référence à la figure et conformément à l'invention, la conduite a une structure multicouche qui comprend cinq couches, à savoir de l'intérieur vers l'extérieur une couche interne 1, une première couche de liaison 4, une couche intermédiaire 2, une deuxième couche de liaison 5 et une couche externe 3.

La couche interne 1 est réalisée en polyamide, de préférence un polyamide 6.

La couche intermédiaire 2 est à base d'un polyamide et d'une polyoléfine. Ici, le polyamide est un polyamide 6 et la polyoléfine est du polyéthylène. Le matériau utilisé est par exemple celui référencé ORGALLOY produit par la société ATOFINA.

La couche externe est réalisée en un matériau thermoplastique élastomère à base de polyesteréther. Le matériau employé est par exemple celui produit sous la référence ARNITEL par la société DSM.

La première couche de liaison 4 est réalisée en un matériau présentant des propriétés d'adhésion envers le matériau de la couche interne 1 et celui de la couche intermédiaire 3.

La deuxième couche de liaison 5 est réalisée en un matériau présentant des propriétés d'adhésion envers la couche intermédiaire 2 et la couche externe 3.

On notera que les couches de liaison 4 et 5 sont facultatives lorsque la couche intermédiaire présente des propriétés d'adhésion suffisantes envers le matériau de la couche interne 1 et celui de la couche externe 3 pour assurer la cohésion des différentes couches les unes avec les autres.

A titre d'exemple, la couche interne 1 a une épaisseur comprise entre 0,2 mm et 0,5 mm environ, la première couche de liaison 4 a une épaisseur de l'ordre de 0,1 mm, la couche intermédiaire 2 a une épaisseur comprise entre 0,2 mm et 0,5 mm, la deuxième couche de liaison 5 a une épaisseur de l'ordre de 0,1 mm, et la couche externe 3 a une épaisseur comprise entre 0,2 mm et 0,4 mm environ.

La conduite est réalisée par coextrusion et peut être lisse ou annelée.

Cette conduite peut être disposée en tout point du véhicule et notamment dans le compartiment moteur de celui-ci ou sous la carrosserie.

Bien entendu, l'invention n'est pas limitée au mode de réalisation décrit et on peut y apporter des variantes de réalisation sans sortir du cadre de l'invention tel que défini par les revendications.

En particulier, les épaisseurs ne sont mentionnées qu'à titre indicatif et peuvent être modifiées en fonction du diamètre de la conduite ou pour tenir compte de conditions particulières d'utilisation en liaison par exemple avec la pression du fluide.

## Revendications

1. Conduite multicouche pour le transport d'un fluide automobile, **caractérisée en ce qu'**elle comprend :
- une couche interne (1) en polyamide,
- une couche intermédiaire (2) à base d'un mélange de polyamide et de polyoléfine,
- une couche externe (3) en un matériau thermoplastique élastomère à base de polyesteréther.

2. Conduite multicouche selon la revendication 1, **caractérisée en ce que** la polyoléfine de la couche intermédiaire (2) est le polyéthylène.

3. Conduite multicouche selon la revendication 1 ou la revendication 2, **caractérisée en ce que** le polyamide utilisé pour la couche interne (1) est un polyamide 6.

4. Conduite multicouche selon l'une quelconque des revendications 1 à 3, **caractérisée en ce qu'**elle comprend une couche de liaison (4) qui est disposée entre la couche interne (1) et la couche intermédiaire (2) et qui possède des propriétés d'adhésion vis-à-vis des matériaux de ces deux couches.

5. Conduite multicouche selon l'une quelconque des revendications 1 à 4, **caractérisée en ce qu'**elle comprend une couche de liaison (5) qui est disposée entre la couche intermédiaire (2) et la couche externe (3) et qui possède des propriétés d'adhésion vis-à-vis des matériaux de ces deux couches.

6. Conduite multicouche selon l'une quelconque des revendications précédentes, **caractérisée en ce que** la couche interne (1) a une épaisseur comprise entre 0,2 mm et 0,5 mm.

7. Conduite multicouche selon l'une quelconque des revendications précédentes, **caractérisée en ce que** la couche intermédiaire (2) a une épaisseur comprise entre 0,2 mm et 0,5 mm.

8. Conduite multicouche selon l'une quelconque des revendications précédentes, **caractérisée en ce que** la couche externe (3) a une épaisseur comprise entre 0,2 mm et 0,4 mm.

9. Conduite multicouche selon la revendication 4 ou la revendication 5, **caractérisée en ce que** la couche de liaison (4, 5) a une épaisseur de l'ordre de 0,1 mm.
